# EUROPÄISCHE PATENTSCHRIFT

(11) **EP 1 499 000 B1**
(45) Veröffentlichungstag und Bekanntmachung des Hinweises auf die Patenterteilung: **26.04.2006**
(21) Anmeldenummer: 03015914.9
(22) Anmeldetag: 12.07.2003
(51) Int. Cl.: H02K 1/14, H02K 3/52

(54) **Segmentierter Stator**
Segmented stator
Stator segmenté

(43) Veröffentlichungstag der Anmeldung: 19.01.2005
(73) Patentinhaber: GRUNDFOS A/S, 8850 Bjerringbro (DK)
(72) Erfinder: Mikkelsen, Steen, 8850 Bjerringbro (DK); Stampe, Lars Toft, 8800 Viborg (DK); Sorensen, Jesper Kok, 8850 Bjerringbro (DK); Poulsen, Brian Lundsted, 8850 Bjerringbro (DK); Hellegaard, Kjeld, 8850 Bjerringbro (DK)
(74) Vertreter: Hemmer, Arnd

(56) Entgegenhaltungen:
- EP-A- 1 024 581
- EP-A- 1 028 513
- EP-A- 1 154 544
- WO-A-02/058210
- DE-U- 20 204 507
- US-A- 6 144 135
- US-A1- 2002 047 425
- US-A1- 2002 113 518
- US-A1- 2002 195 900
- PATENT ABSTRACTS OF JAPAN vol. 1997, no. 06, 30. Juni 1997 (1997-06-30) -& JP 09 046941 A (MATSUSHITA ELECTRIC IND CO LTD), 14. Februar 1997 (1997-02-14)
- PATENT ABSTRACTS OF JAPAN vol. 2000, no. 15, 6. April 2001 (2001-04-06) -& JP 2000 358346 A (MATSUSHITA SEIKO CO LTD), 26. Dezember 2000 (2000-12-26)

## Beschreibung

Die Erfindung betrifft einen segmentierten Stator für einen Elektromotor, insbesondere für ein Pumpenaggregat.

Aus dem Stand der Technik sind Statoren für Elektromotoren bekannt, welche aus einzelnen Statorsegmenten, welche jeweils eine Wicklung tragen, zusammengesetzt sind. Der segmentierte Aufbau des Stators ermöglicht ein leichteres Aufbringen der Wicklungen auf die Statorsegmente. Zur Montage des Stators müssen die einzelnen Statorsegmente zusammengesetzt und fest miteinander verbunden werden, um einen Stator zu bilden.

Ein derart aus zahlreichen Einzelteilen zusammengesetzter Stator ermöglicht zwar eine leichte Anordnung der Wicklungen, ist jedoch insgesamt sehr aufwendig zu montieren.

WO 02/058210 A 1 offenbart einen Stator, welcher aus zwei Modulen zusammengesetzt ist. Jedes Modul besteht aus einem umfänglichen Ring, an dessen lnnenumfang jeweils drei Abschnitte des Stators beabstandet zueinander angeordnet sind. Beide Module können so ineinander gesteckt werden, dass die Statorabschnitte des einen Moduls in die Zwischenräume zwischen den Abschnitten des anderen Moduls eingreifen. An jedem Abschnitt ist ein Zahn ausgebildet, um welchen eine Wicklung angeordnet werden kann. Dieser Aufbau des Stators aus zwei Modulen hat den Vorteil, dass vor dem Zusammensetzen der Module die Wicklungen leicht auf die einzelnen Zähne aufgebracht werden können. Nach dem Zusammensetzen der Module müssen die Wicklungen dann noch elektrisch miteinander verbunden werden, was einen zusätzlichen Fertigungsschritt fordert.

EP 1 024 581 A2 offenbart ein System zur Kontaktierung der Spulen eines Stators eines Spaltrohrmotors, wie er in Pumpen eingesetzt wird. Bei diesem System ist ein Verbindungselement vorgesehen, welches nach Montage des Stators axialseitig aufgesetzt wird, wobei jeweils ein Draht jeder Spule mit dem Verbindungselement zum Aufbau der elektrischen Verbindung der Spulen untereinander verbunden wird.

Es ist Aufgabe der Erfindung, einen verbesserten segmentierten Stator für einen Spaltrohrmotor zu schaffen, welcher eine vereinfachte Montage des Stators und insbesondere eine vereinfachte elektrische Verdrahtung bzw. Verschaltung der Spulen des Stators ermöglicht.

Diese Aufgabe wird durch einen segmentierten Stator mit den im Anspruch 1 angegebenen Merkmalen gelöst. Bevorzugte Ausführungsformen ergeben sich aus den Unteransprüchen.

Der erfindungsgemäße segmentierte Stator für einen Elektromotor, welcher sich insbesondere für ein elektromotorisch angetriebenes Pumpenaggregat eignet, weist eine Vielzahl von Wicklungen auf, wobei jede Wicklung in einem separaten Statorsegment angeordnet ist. Erfindungsgemäß sind die Statorsegmente so ausgestattet, dass vor bzw. zur Montage des Stators zumindest zwei Statorsegmente durch ein Verbindungselement mechanisch zu einer vormontierten Baugruppe verbunden sind. Auf diese Weise wird aus zumindest zwei einzelnen Stotorsegmenten mit jeweils einer Wicklung eine verbundene Statorsegmentgruppe geschaffen. Dies reduziert die Anzahl der bei der abschließenden Montage des Stators zusammenzusetzenden Bauteile, da nur noch wenige vormontierte Statorsegmentgruppen, welche jeweils zumindest zwei Statorsegmente aufweisen, zusammengesetzt werden müssen. Auf diese Weise wird es erheblich einfacher, den Stator bei der Montage zusammenzusetzen und die einzelnen Statorsegmente miteinander zu verbinden, da bei der abschließenden Montage nur noch die Statorsegmentgruppen miteinander verbunden werden müssen, in welchen bereits mehrere Statorsegmente als vormontierte Baugruppe miteinander verbunden sind. Der aus den vormontierten Statorsegmentgruppen zusammengesetzte Stator kann dann in ein Statorgehäuse eingesetzt werden. Das Verbindungselement, welches zumindest zwei Statorsegmente zu einer vormontierten Statorsegmentgruppe verbindet, ist vorzugsweise jeweils axialseitig, d.h. im Bereich des axialen Endes, angeordnet, so dass es im montierten Zustand des Stators im Bereich eines axialen Endes des Stators angeordnet ist. Alternativ kann das Verbindungselement beispielsweise auch umfänglich am Innen- oder Außenumfang des Stators bzw. der zu verbindenden Statorsegmente angeordnet sein.

Im Inneren des Stators ist ein Spaltrohr angeordnet. Diese Anordnung dient der Verwendung des Elektromotors als Nassläufer, beispielsweise in einem Pumpenaggregat. Die einzelnen Statorelemente werden somit in dem ringförmigen Spalt zwischen Spaltrohr und einem Statorgehäuse angeordnet, so dass die Statorsegmente zwischen Spaltrohr und Statorgehäuse sicher, vorzugsweise als Presspassung in den Spalt zwischen Spaltrohr und Statorgehäuse eingesetzt, so dass die Statorsegmente gegeneinander verspannt werden und somit im Betrieb keine Geräusche verursachen können.

Die elektrische Verbindung zweier Wicklungen einer Statorsegmentgruppe verläuft entlang der mechanischen Verbindung zwischen den Statorsegmenten. Dies ermöglicht eine sichere Anordnung der elektrischen Verbindung der zwei, überlicherweise von einander beabstandeten Spulen. Die elektrische Verbindung ist so beim Zusammensetzen der Statorsegmentgruppen zu einem Stator vor Beschädigungen geschützt. Ferner ist die Statorsegmentgruppe leicht zu handhaben, da mechanische und elektrische Verbindung an einer Stelle zusammengefasst sind.

Es sind jeweils Statorsegmente mit Wicklungen gleicher Phase zu einer Statorsegmentgruppe und die zugehörigen Wicklungen elektrisch miteinander verbunden. Diese Anordnung ermöglicht, dass die Wicklungen gleicher Phase bereits vor der abschließenden Montage des Stators nicht nur mechanisch verbunden, sondern auch elektrisch miteinander verschaltet werden, so dass der Aufwand für die Verdrahtung bzw. für die Verschaltung der einzelnen Wicklungen nach Montage des Stators verringert wird.

Vorzugsweise sind vor der Montage des Stators jeweils zumindest zwei nicht benachbarte Statorsegmente mechanisch zu einer vormontierten Statorsegmentgruppe verbunden und zumindest zwei Statorsegmentgruppen zu einem Stator zusammensetzbar. Die Statorsegmente einer Statorsegmentgruppe sind dabei derart beabstandet, dass jeweils zumindest ein Statorsegment einer zweiten Statorsegmentgruppe in Umfangsrichtung des Stators zwischen die Statorsegmente der ersten Statorsegmentgruppe eingesetzt werden kann. Die Statorsegmente der einzelnen Statorsegmentgruppen greifen somit verzahnt ineinander, wenn die einzelnen Statorsegmentgruppen zu einem gesamten Stator zusammengesetzt werden. Ferner ermöglicht diese Anordnung, dass ein so zusammengesetzter Stator ohne weitere Verbindungsmittel zumindest in der radialen Richtung zusammengehalten wird, d.h., dass sich die einzelnen Statorsegmente in radialler Richtung nicht voneinander lösen können. Auf diese Weise wird die Montage und Verbindung der einzelnen Statorsegmente deutlich vereinfacht.

Weiter bevorzugt weist jedes Statorsegment zumindest einen Wicklungsträger auf welchem die Wicklung angeordnet ist, sowie vorzugsweise ein inneres und/oder äußeres Jochsegment auf. Die Jochsegmente können in bekannter Weise aus einzelnen Statorblechen aufgebaut sein. Der Wicklungsträger dient zur Halterung der Wicklung sowie zur elektrischen Isolierung der Wicklung gegenüber den Statorblechen der Jochsegmente. Die Wicklungsträger sind daher vorzugsweise aus Kunststoff ausgebildet. Die Wicklungsträger können mit der bereits aufgebrachten Wicklung oder vor Aufbringen der Wicklung auf die Jochsegmente aufgesteckt werden. Alternativ kann der Wicklungsträger durch Umspritzen im Spritzguss an den inneren und/oder äußeren Jochsegmenten angeordnet werden und anschließend die Wicklung aufgewickelt werden.

Besonders bevorzugt ist zumindest jeweils ein Abschnitt der Wicklungsträger der zumindest zwei Statorsegmente einer Statorsegmentgruppe mit zumindest einem die Statorsegmente mechanisch verbindenden Verbindungselement einstückig, vorzugsweise aus Kunststoff ausgebildet. Dabei können die gesamten Wicklungsträger einer Statorsegmentgruppe einstückig mit den Verbindungselementen ausgebildet sein. Alternativ kann auch jeweils nur ein Abschnitt der Wicklungsträger, beispielsweise eine Hälfte der Wicklungsträger einstückig mit dem oder den Verbindungselementen ausgebildet sein. Dies ermöglicht eine geteilte Ausgestaltung der Wicklungsträger, so dass diese beispielsweise aus zwei Hälften zusammengesetzt werden können, um sie so auf ein entsprechendes Jochsegment in axialer oder umfänglicher Richtung aufstecken zu können. Ein derart geteilter Wicklungsträger besteht vorzugsweise aus zwei im Wesentlichen u-förmigen Halbschalen, welche von zwei entgegengesetzten axialen Längsenden her auf den Zahn bzw. Verbindungssteg zwischen innerem und äußerem Jochsegment aufgesteckt werden können.

Dazu können besonders bevorzugt die Wicklungen der Statorsegmente einer Statorsegmentgruppe durch einen ununterbrochenen Wicklungsdraht gebildet sein. Dies ermöglicht, dass die Motorwicklungen gleicher Phase, welche an einer Statorsegmentgruppe angeordnet sind, in einem Arbeitsgang gewickelt werden können, ohne dass nach dem Wickeln die Spulen durch separate Leitungen bzw. Verschaltungselemente elektrisch miteinander verbunden werden müssen. So kann zunächst auf einem ersten Wicklungsträger eine erste Spule gewickelt werden und anschließend der Wicklungsdraht zu einem zweiten Statorsegment bzw. einem zweiten Wicklungsträger der Statorsegmentgruppe geführt werden und dann die dort vorgesehene Wicklung mit demselben Wicklungsdraht gewickelt werden.

Gemäß einer besonderen Ausführungsform sind zumindest zwei Statorsegmentgruppen derart zu einem Stator zusammensetzbar, dass die mechanische Verbindung der Statorsegmente der ersten Statorsegmentgruppe an einer ersten Axialseite des Stators und die mechanische Verbindung der Statorsegmente der zweiten Statorsegmentgruppe an einer zweiten entgegengesetzten Axialseite des Stators angeordnet sind. Bei dieser Anordnung werden die Statorsegmentgruppen mit ihren offenen, d.h. den Verbindungselementen abgewandten Seiten einander zugewandt ausgerichtet und dann ineinander gesetzt bzw. ineinander gesteckt, so dass die einzelnen Statorsegmente der ersten Statorsegmentgruppe in die Freiräume zwischen den Statorsegmenten der zweiten Statorsegmentgruppe eingreifen. Die Anordnung der Verbindungselemente an entgegengesetzten Enden des Stators hat den Vorteil, dass die Verbindungselemente beim Zusammensetzen nicht kollidieren und das eine größtmögliche Freiheit bei der Gestaltung der Verbindungselemente gegeben ist. Ferner können die Verbindungselemente so ausgestaltet werden, dass das Verbindungselement der ersten Statorsegmentgruppe gleichzeitig als Wicklungsschutzkappe für die Wicklungen der zweiten Statorsegmentgruppe dient. Dabei ist das Verbindungselement der ersten Statorsegmentgruppe so ausgebildet, dass es die Wicklungsträger mit den Wicklungen der zweiten Statorsegmentgruppe an derjenigen Axialseite überdeckt, welche dem zugehörigen Verbindungselement der zweiten Statorsegmentgruppe abgewandt ist.

Alternativ können die Statorsegmentgruppen so ausgestaltet sein, dass sie derart zu einem Stator zusammensetzbar sind, dass die mechanischen Verbindungen zwischen den einzelnen Statorsegmenten der Statorsegmentgruppen alle im Bereich derselben Axialseite des Stators angeordnet sind. Diese Anordnung ermöglicht, dass alle Statorsegmentgruppen von derselben Seite her aufeinander gesetzt bzw. zusammengesteckt werden können. Darüber hinaus erleichtert diese Anordnung die elektrische Verbindung der einzelnen Wicklungen miteinander, wenn die elektrischen Verbindungen entlang der mechanischen Verbindungen zwischen den Statorsegmenten einer Statorsegmentgruppe geführt werden, da so leicht alle elektrischen Anschlüsse an einer Axialseite des Stators angeordnet werden können.

Zur Anordnung der mechanischen Verbindungen an einer Axialseite des Stators sind die mechanischen Verbindungen zwischen den Statorsegmenten vorzugsweise so ausgebildet, dass die einzelnen Verbindungen der mehreren Statorsegmentgruppen im zusammengesetzten Zustand des Stators zumindest in Teilbereichen übereinander liegen. Da die Statorsegmente einer Statorsegmentgruppe so voneinander beabstandet sind, dass zwischen ihnen Statorsegmente einer oder mehrerer weiterer Statorsegmentgruppen angeordnet werden können, verlaufen die zugehörigen mechanischen Verbindungen bzw. Verbindungselemente, welche die Statorsegmente der einzelnen Statorsegmentgruppen miteinander verbinden, gekreuzt. Das bedeutet, die einzelnen mechanischen Verbindungen, weiche beispielsweise in Form von Verbindungsstegen ausgebildet sind, kreuzen einander wobei sie in axialer Richtung hintereinander bzw. übereinander liegen. Weiter bevorzugt können an dem Kreuzungsstellen entsprechende Ausnehmungen oder Nuten ausgebildet sein, in welche die jeweils kreuzenden Stege bzw. Verbindungen eingreifen, so dass in axialer Richtung eine möglichst flache Ausgestaltung der übereinander liegenden Verbindungen erreicht wird. Alternativ können die Verbindungen bzw. Stege zwischen den Statorsegmenten einer Statorsegmentgruppe derart schräg verlaufen, dass der Angriffspunkt der Verbindung an einem ersten Statorsegment einer Statorsegmentgruppe näher zum axialen Ende hin gelegen ist als der Angriffspunkt der Verbindung an einem zweiten Statorsegment derselben Statorsegmentgruppe. Da die einzelnen Statorsegmente in unterschiedlichen Winkelpositionen bezüglich der Statorlängsachse zusammengesetzt werden, ermöglicht der schräge Verlauf der Verbindungsstege zwischen den einzelnen Statorsegmenten, dass die Statorsegmentgruppen so ineinander gesetzt werden können, dass alle mechanischen Verbindungen an einer Axialseite übereinander liegen, wobei sich die mechanischen Verbindungen zwischen den Statorsegmenten kreuzen.

Gemäß einer weiteren bevorzugten Ausführungsform sind die mechanischen Verbindungen zwischen den einzelnen Statorsegmenten in Form zumindest eines ringförmigen Verbindungselementes, vorzugsweise in Form einer Wicklungsschutzkappe ausgebildet, welches mit zumindest einer Axialseite der Statorsegmente verbunden oder verbindbar ist. Das ringförmige Verbindungselement hält die einzelnen Statorsegmente an zumindest einer Axialseite des Stators zusammen. Auch ein solches Verbindungselement kann so eingesetzt werden, dass jeweils zumindest zwei, vorzugsweise beabstandet zueinander angeordnete Statorsegmente vor der endgültigen Montage des Stators zu einer Statorsegmentgruppe zusammengefasst werden. Auch bei dieser Ausführungsform können die elektrischen Verbindungen von zusammengehörigen Wicklungen, d.h. von Wicklungen gleicher Phase entlang des Verbindungselementes geführt werden. Besonders bevorzugt ist das Verbindungselement gleichzeitig als Wicklungsschutzkappen ausgebildet, welche die Wicklungen axialseitig schützt und gegenüber einem Statorgehäuse, in welches der Stator eingesetzt wird, elektrisch isoliert. Dabei bildet die Wicklungsschutzkappe erfindungsgemäß gleichzeitig dass Verbindungselement, welches die einzelnen Statorsegmente mechanisch zusammen hält. Die Wicklungsschufzkappe hat somit zusätzlich eine tragende Funktion.

Besonders bevorzugt sind zwei derartige ringförmige Verbindungselemente in zwei einander entgegensetzten Axialseiten des Stators vorgesehen. Wenn die zwei ringförmigen Verbindungselemente als Wicklungsschutzkappen ausgebildet sind, werden somit die axialen Seiten der Wicklungen vollständig geschützt und können sicher gegenüber einem Statorgehäuse durch die Wicklungsschutzkappe, welche vorzugsweise aus Kunststoff ausgebildet ist, isoliert werden.

Gemäß einer bevorzugten Ausführungsform sind zwei oder drei Statorsegmentgruppen vorgesehen. Dabei hängt die Anzahl der Statorsegmentgruppen von der Anzahl der Wicklungen bzw. Pole des Motors ab. Wenn alle Statorsegmente mit Wicklungen gleicher Phase zu einer Statorsegmentgruppe zusammengefasst werden, hängt die Anzahl der Statorsegmentgruppen insbesondere von der Anzahl unterschiedlicher Phasen ab. Wenn beispielsweise zwei Phasen vorgesehen sind, werden zweckmäßigerweise auch zwei Statorsegmentgruppen vorgesehen.

Weiter bevorzugt weist jede Statorsegmentgruppe zwei Statorsegmente oder jede Statorsegmentgruppe drei Statorsegmente auf. Die Anzahl der Statorsegmente pro Statorsegmentgruppe hängt wiederum von der Anzahl der Statorsegmente bzw. Wicklungen in dem Stator ab. Wenn bevorzugt die Statorsegmente mit Wicklungen gleicher Phase zu einer Statorsegmentgruppe zusammengefasst werden, hängt die Anzahl der Statorsegmente pro Statorsegmentgruppe ferner von der Anzahl von Wicklungen gleicher Phase ab. Beispielsweise können bei einem Motor mit sechs Wicklungen bzw. Statorsegmenten und drei Phasen drei Statorsegmentgruppen mit jeweils zwei Statorsegmenten gleicher Phase vorgesehen sein. Bei einem Stator mit neun Statorsegmenten und zugehörigen Wicklungen können beispielsweise drei Statorsegmentgruppen mit jeweils drei Statorsegmenten mit Wicklungen gleicher Phase vorgesehen sein. Dabei sind die einzelnen Statorsegmente an einer Statorsegmentgruppe jeweils gleichmäßig beabstandet, so dass die Statorsegmente mit den Wicklungen gleicher Phase gleichmä-βig über den Umfang des Stators verteilt angeordnet sind.

Besonders bevorzugt sind mehrere oder alle Statorsegmentgruppen des Stators identisch ausgebildet, dies ermöglicht eine kostengünstige Herstellung des Stators, da die Zahl der unterschiedlichen Einzelteile reduziert werden kann. So können beispielsweise zwei oder drei identische Statorsegmentgruppen zu einem Stator zusammengesetzt werden, wobei die Statorsegmentgruppen jeweils eine andere Winkellage bezüglich der Längsachse des Stators einnehmen, so dass die einzelnen Statorsegmente gleichmäßig über den Umfang des Stators verteilt angeordnet sind. Bei drei Statorsegmentgruppen mit jeweils zwei Statorsegmenten sind diese beispielsweise um 60° Grad zueinander verdreht angeordnet. Bei drei Statorsegmentgruppen mit jeweils drei Statorsegmenten sind diese beispielsweise um jeweils 40° Grad zueinander verdreht angeordnet. Zwei Statorsegmentgruppen mit jeweils zwei Statorsegmenten sind entsprechend in einen Winkel von 90° Grad zueinander angeordnet.

Gemäß einer weitern bevorzugten Ausführungsform, welche auch bei anderen als den vorausgehend beschriebenen segmentierten Statoren verwirklicht werden kann, liegen die Statorsegmente an Ihrem Außenumfang lediglich mit ihren den angrenzenden Statorsegmenten zugewandten Endbereichen am Innenumfang eines Statorgehäuses an. Das bedeutet, der Bereich des Außenumfanges, welcher in Umfangsrichtung zwischen den angrenzenden Statorsegmenten zugewandten Endbereichen liegt, ist von der Innenwand des Statorgehäuses beabstandet. Diese Anordnung bewirkt, dass beim Einpressen des Stators in das Statorgehäuse ein gezielter Druck in radialer Richtung auf die Endbereiche der Statorsegmente ausgeübt wird, so dass die einzelnen Statorsegmente aneinander gedrückt werden und somit der gesamte Stator bestehend aus den einzelnen Statorsegmenten spielfrei zusammengehalten wird.

Zusätzlich können die Statorsegmente an ihrem Außenumfang mit Abschnitten im Bereich oder seitlich eines Zahnes, auf dem der Wicklungsträger mit der Wicklung angeordnet ist, am Innenumfang des Statorgehäuses anliegen. Auch bei dieser Ausführungsform liegen die Statorsegmente nicht mit ihrer gesamten Außenumfangsfläche am Innenumfang des Statorgehäuses an. Dadurch, dass die Statorsegmente nur in bestimmten Bereichen an dem Statorgehäuse anliegen, können gezielt Druckkräfte aufgebracht werden, welche die einzelnen Statorsegmente aneinander drücken und miteinander verspannen. Dabei werden die Anlage- bzw. Krafteinleitungspunkte so gewählt, dass die gebogenen Statorsegmente weiter zusammengebogen werden, d.h. ihre in Umfangsrichtung entgegensetzten freien Enden geringfügig radialwärts und somit aufeinander zu bewegt werden. Auf diese Weise werden die in Umfangsrichtung nebeneinander liegenden Statorsegmente mit ihren einander zugewandten Seiten gegeneinander gedrückt.

Eine solche Anordnung kann vorzugsweise dadurch erreicht werden, dass das Statorgehäuse einen kreisförmigen Innenquerschnitt aufweist und die Statorsegmente einen korrespondierenden kreisbogenförmigen Außenumfang, d.h. einen Außenumfang mit im Wesentlichen gleichem Radius wie der Innenquerschnitt des Statorgehäuses, aufweisen, wobei die Bereiche zwischen den am Innenumfang des Statorgehäuses anliegenden Abschnitten des Außenumfanges der Statorsegmente abgeflacht ausgebildet sind. In den Bereichen, in denen die Statorsegmente umfänglich abgeflacht sind, wird somit ein Freiraum zwischen Außenseite des Statorsegmentes und Innenseite des Statorgehäuses geschaffen, so dass die Statorsegmente nur an den definierten Anlagenbereichen am Innenquerschnitt des Statorgehäuses anliegen.

Die vorangehend beschriebene Ausführungsform, gemäß derer die Statorsegmente nur mit definierten Teilabschnitten ihres Außenumfanges am Innenumfang eines Statorgehäuses anliegen, kann prinzipiell für jeden segmentierten Stator eingesetzt werden, bei welchem der aus einzelnen Statorsegmenten zusammengesetzte Stator in ein Statorgehäuse eingesetzt wird.

Nachfolgend wird die Erfindung anhand der beigefügten Figuren beispielhaft beschrieben. In diesen zeigt:
- Fig. 1:: eine perspektivische Ansicht zweier Statorsegmente mit elektrisch miteinander verbundenen Wicklungen,
- Fig. 2:: eine Statorsegmentgruppe mit zwei mechanischen miteinander verbundenen Statorsegmenten,
- Fig. 3:: schematisch die Anordnung von drei Statorsegmentgruppen gemäß Fig. 2 zum Zusammensetzen des Stators,
- Fig. 4:: einen gemäß Fig. 3 zusammengesetzten Stator,
- Fig. 5:: eine Statorsegmentgruppe mit drei mechanisch miteinander verbundenen Statorsegmenten,
- Fig. 6:: drei Statorsegmentgruppen gemäß Fig. 5 vor dem Zusammensetzen des Stators,
- Fig. 7:: einen gemäß Fig. 6 aus drei Statorsegmentgruppen zusammengesetzten Stator,
- Fig. 8:: eine zweite Ausführungsform der Erfindung mit zwei Statorsegmentgruppen vor dem Zusammensetzen des Stators,
- Fig. 9:: einen gemäß Fig. 8 zusammengesetzten Stator,
- Fig. 10:: eine perspektivische Ansicht eines Stators mit vier Statorsegmenten vor dem Zusammensetzen,
- Fig. 11:: einen gemäß Fig. 10 zusammengesetzten Stator,
- Fig. 12:: eine Schnittansicht eines aus vier Statorsegmenten zusammengesetzten Stators und
- Fig. 13:: einen vergrößerten Ausschnitt des Stators gemäß Fig. 12.

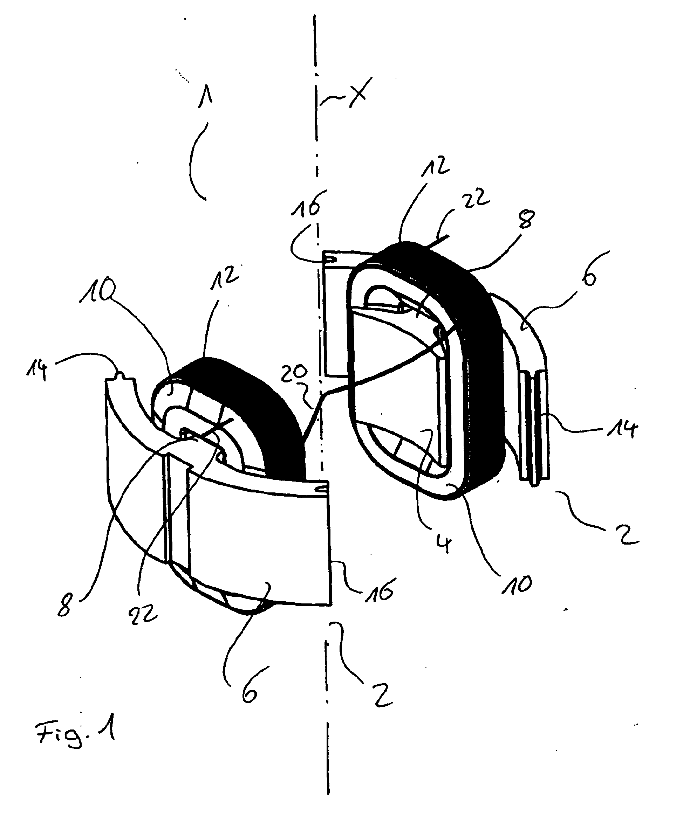

Fig. 1 zeigt in einer perspektivischen Ansicht die Anordnung zweier einander diametral gegenüber liegender Statorsegmente 2. Die Statorsegmente 2 weisen jeweils ein inneres Jochsegment 4 sowie ein äußeres Jochsegment 6 auf, welche radial zueinander beabstandet sind und durch einen sich in radialer Richtung erstreckenden Zahn bzw. Steg 8 miteinander verbunden sind. Diese Jochabschnitte gebildet aus innerem Jochsegment 4, äußerem Jochsegment 6 und Zahn 8 sind in bekannter Weise aus geschichteten Statorblechen ausgebildet. Zwischen dem inneren Jochsegment 4 und dem äußeren Jochsegment 6 ist auf dem Zahn 8 jeweils ein Wicklungsträger 10 angeordnet, um welchen die Wicklung 12 gewickelt ist. Der Wicklungsträger isoliert die Wicklung 12 gegenüber den Metallteilen des Joches. An den äußeren Jochsegmenten 6 ist an einem im Umfangsrichtung ersten Ende jeweils eine Feder 14 und am in Umfangsrichtung entgegensetzten Ende jeweils eine Nut 16 ausgebildet, so dass aneinander angrenzende Jochsegmente über Nut 16 und Feder 14 formschlüssig miteinander in Eingriff treten können. Im gezeigten Beispiel handelt es sich um zwei diametral entgegengesetzt im Stator angeordnete Statorsegmente 2, deren Wicklungen 12 in dem Motor die gleiche Phase aufweisen. Dies ermöglicht, dass die Wicklungen 12 bereits vor dem Zusammensetzen des gesamten Stators elektrisch über einen Draht bzw. eine Leitung 20 miteinander verbunden sind. Die beiden Wicklungen 12 sind kontinuierlich gewickelt, d.h. zunächst wird die eine Wicklung gewickelt, anschließend wird der Wicklungsdraht als Leitung 20 zu dem diametral gegenüberliegenden Statorsegment 2 weitergeführt und dann die dortige Wicklung gewickelt. Im gezeigten Beispiel ist somit an jedem der beiden Statorsegmente jeweils ein elektrischer Anschlusspol 22 des Spulenpaares bestehend aus zwei Spulen bzw. Wicklungen 12, welche über den Draht 20 miteinander verbunden sind, vorgesehen.

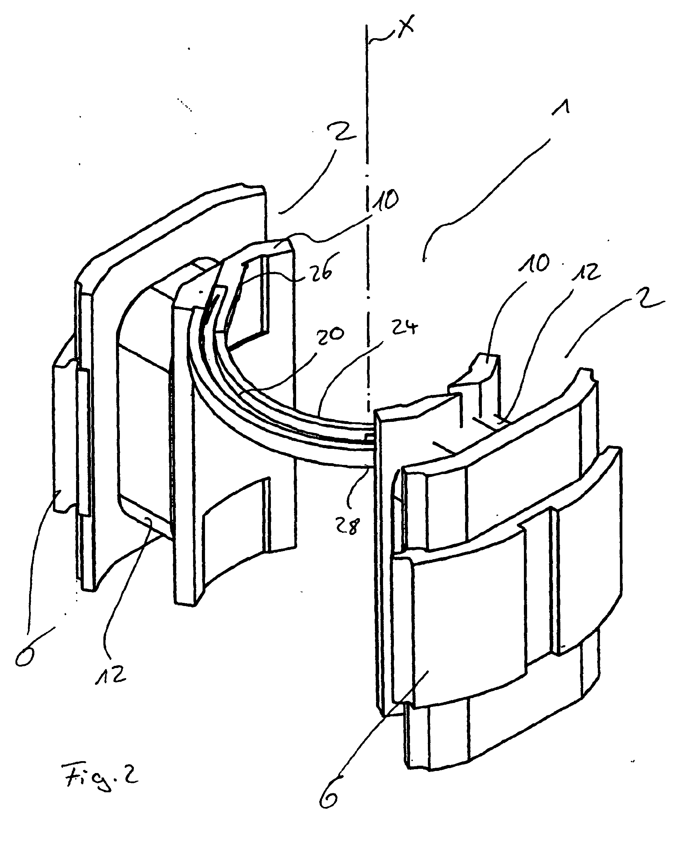

Fig. 2 zeigt eine perspektivische Ansicht einer Statorsegmentgruppe 1 bestehend aus zwei entsprechend Fig. 1 angeordneten Statorsegmenten 2. In dem in Fig. 2 gezeigten Beispiel sind die inneren Jochsegmente 4 sowie die Zähne 8 und die äußeren Jochsegmente 6 fest mit dem Wicklungsträger 10 verbunden, indem sie in den Wicklungsträger 10, welcher aus Kunststoff ausgebildet ist, eingegossen sind. Alternativ ist es möglich, die Wicklungsträger 10 (siehe auch Fig. 1) geteilt auszubilden, so dass sie jeweils aus zwei u-förmigen Halbschalen bestehen, welche in axialer Richtung X von zwei entgegensetzten Seiten her über den Zahn 8 geschoben werden und anschließend mit dem Wicklungsdraht umwickelt werden. Dabei können die beiden Teile jedes Wicklungsträgers 10 beispielsweise durch Rastelemente miteinander verbunden werden. Die Wicklungsträger 10 jedes Statorsegmentes 2 sind über ein Verbindungselement bzw. einen Verbindungssteg 24 mechanisch miteinander verbunden, wobei das Verbindungselement 24 einstückig mit dem Wicklungsträger 10 oder einem Teil von diesem ausgebildet ist. Das Verbindungselement 24 ist an einer Axialseite der Statorsegmente angeordnet, wobei ein erstes Ende 26 des Verbindungselementes 24 an dem ersten Statorsegment 2 direkt am axialen Ende des Wicklungsträgers 10 angeordnet ist. Das entgegensetzte Ende 28 des Verbindungselementes 24 ist von derselben Axialseite der Statorsegmentgruppe 1 weiter beabstandet mit dem zweiten Wicklungsträger 10 verbunden, so dass ein schräger Verlauf des Verbindungselementes 24 zwischen den beiden Statorsegmenten 2 erreicht wird. Das Verbindungselement 24 verläuft somit in einer Ebene, welche bezüglich einer sich nochmal zu der Statorlängsachse X erstreckenden Ebene geneigt ist. Ferner verläuft das Verbindungselement 24 zwischen den beiden Statorsegmenten 2 gekrümmt, so dass der Raum um die Längsachse X zwischen den Statorsegmenten 2 freigehalten wird um eine Rotorwelle bzw. deren Lagerung aufnehmen zu können. Auf den Wicklungsträgern 10 sind die Wicklungen 12 in der anhand von Fig. 1 beschriebenen Weise angeordnet, wobei der Draht 20 in einer Nut im Inneren des Verbindungselementes 24 verläuft. Gemäß dieser Anordnung sind die Statorsegmente 2 mit Wicklungen 12 gleicher Phase nicht nur elektrisch sondern auch mechanisch zu einer vormontierten Baugruppe, d.h. einer Statorsegmentgruppe 1 verbunden.

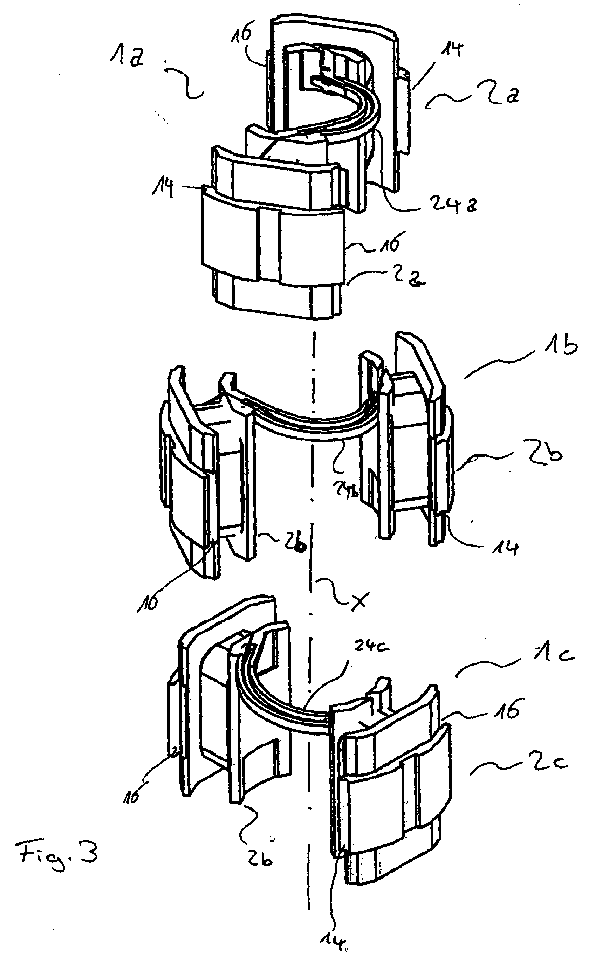

Gemäß der beschriebenen Ausführungsform können drei Statorsegmentgruppen 1 gemäß Fig. 2, wie anhand von Fig. 3 gezeigt, zu einem Stator zusammengesetzt werden. Der Stator gemäß dieser Ausführungsform weist somit insgesamt 6 Statorsegmente mit 6 Spulen bzw. Wicklungen auf, wobei jeweils 2 Statorsegmente 2a, 2b und 2c zu einer Statorsegmentgruppe 1a, 1b und 1c zusammengefasst sind. Die drei Statorsegmentgruppen 1a, 1b und 1 c gemäß Fig. 3 entsprechend der anhand von Fig. 2 beschriebenen Statorsegmentgruppe 1, d.h. sind identisch ausgebildet. Die drei Statorsegmentgruppen 1a, 1b und 1c werden jeweils um 60° Grad bezüglich der Längsachse X gegeneinander verdreht zusammengesteckt, wobei die Verbindungselemente 24a, 24b und 24c der drei Statorsegmentgruppen 1a, 1b und 1 c an einer Axialseite des Stators übereinander zu liegen kommen. Aufgrund des schrägen Verlauf der Verbindungselemente 24a, 24b und 24c können die Verbindungselemente 24 einander kreuzend übereinander liegend angeordnet werden, wenn die einzelnen Statorsegmente 2a, 2b und 2c in Umfangsrichtung nebeneinander angeordnet werden. Wenn die drei Statorsegmentgruppen 1a, 1b und 1c zusammengesetzt werden, greifen die aneinander angrenzenden Statorsegmente 2a, 2b und 2c jeweils mit Nut 16 und Feder 14 formschlüssig ineinander.

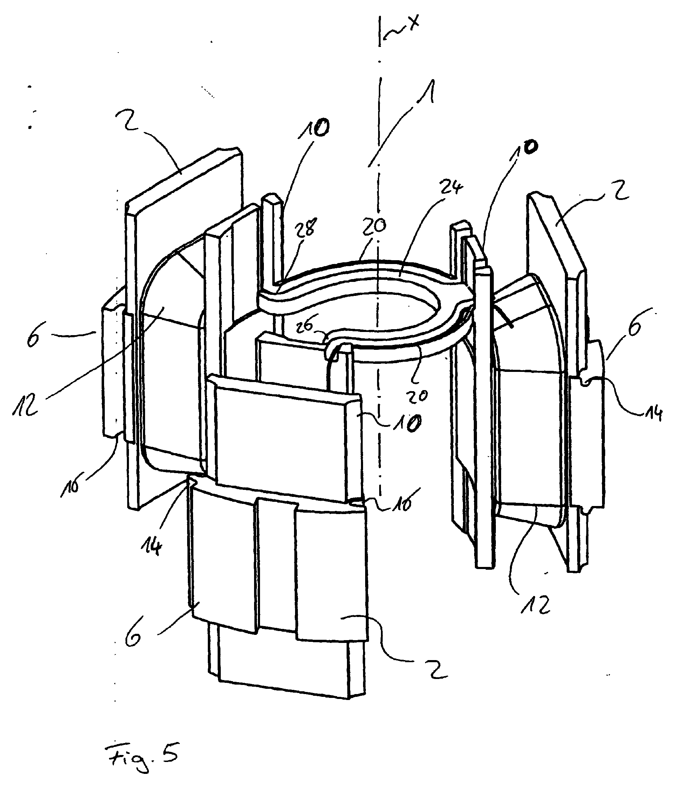

Fig. 4 zeigt den zusammengesetzten Zustand dieses Stator. Die einzelnen Statorsegmente 2a, 2b und 2c bilden einen geschlossenen Statorring, wobei sich die einzelnen Statorsegmente 2a, 2b und 2c der drei Statorsegmentgruppen 1a, 1 b und 1 c abwechseln, d.h. Statorsegmente mit Wicklungen gleicher Phase wechseln sich ab, so dass die Wicklungen 12 gleicher Phase gleichmäßig über den Umfang des Stators verteilt sind. Die Verbindungselemente 24a, 24b und 24c, in denen ebenfalls die elektrischen Verbindungen in Form von Drähten 20 verlaufen kreuzen einander und verlaufen aufgrund ihrer bogenförmigen Gestalt am Innenumfang des Stators, so dass der Bereich um die Längsachse X frei bleibt, um eine Rotorwelle in den Stator einzusetzen. Im zusammengesetzten Zustand greifen die äußeren Jochsegmente 6 der drei Statorsegmentgruppen jeweils über Nut 16 und Feder 14 formschlüssig ineinander, so dass ein geschlossenes ringförmiges äußeres Joch gebildet wird.

Fig. 5 zeigt eine perspektivische Ansicht einer Statorsegmentbaugruppe 1 mit drei Statorsegmenten 2. Der Aufbau der einzelnen Statorsegmente 2 entspricht dem anhand von Fig. 1 und 2 beschriebenen Aufbau der Statorsegmente. Bei der Ausführungsform gemäß Fig. 5 sind drei Statorsegmente jeweils um 120° Grad bezüglich der Längsachse X beabstandet angeordnet. Die drei auf den Wicklungsträgern 10 der Statorsegmente 2 angeordneten Spulen 12 weisen die gleiche Phase auf und sind über den Draht 20 miteinander verbunden. Dabei können die Spulen und die Verbindungsdrähte 20 als durchlaufender Draht ausgebildet werden. Dazu wird zunächst eine erste Spule 12 auf einen Wicklungsträger 10 gewickelt, dann der Wicklungsdraht 20 an dem Verbindungselement 24 zu dem zweiten Wicklungsträger 2 weitergeführt, dort die zweite Spule 12 gewickelt und anschließend der Draht 20 zu dem dritten Statorsegment weitergeführt und dort die dritte Spule 12 gewickelt. So können sehr einfach elektrisch miteinander verbundene Spulen gleicher Phase auf drei Wicklungsträgern 10 angeordnet werden, welche über den Umfang des Stators gleichmäßig voneinander beabstandet angeordnet sind. Das Verbindungselement 24 ist einstückig mit den Wicklungsträgern 10 aus Kunststoff ausgebildet und verläuft wie auch bei dem Ausführungsbeispiel gemäß Fig. 2 schräg. Das bedeutet, das erste Ende des Verbindungselementes 24 ist direkt am axialen Ende des ersten Wicklungsträgers 10 einstückig mit diesem verbunden. In seinem Mittelbereich ist das Verbindungselement 24 beabstandet zum axialen Ende mit einem zweiten Wicklungsträger 10 verbunden und das zweite Ende 28 des Verbindungselementes 24 ist in axialer Richtung X noch weiter von dem axialen Ende beabstandet mit dem dritten Wicklungsträger einstückig verbunden. Diese Anordnung ermöglicht, dass die Verbindungselemente 24 von mehreren Statorsegmentgruppen 1 übereinander liegend an einem axialen Ende des Stators angeordnet werden können. Ferner verläuft auch bei dieser Ausführungsform das Verbindungselement 24 als ringförmiger Steg am Innenumfang des Stators, so dass der Bereich um die Längsachse X zur Aufnahme einer Rotorwelle frei bleibt.

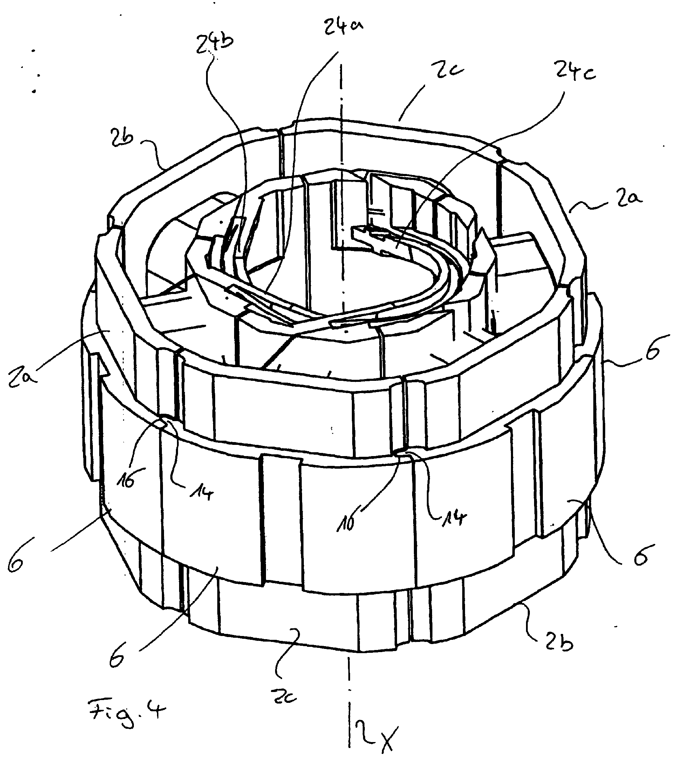

Fig. 6 zeigt schematisch den Zusammenbau des Stators aus drei Statorsegmentgruppen 1 a, 1 b und 1c, wie sie anhand von Fig. 5 beschrieben wurden. Die drei Statorsegmentgruppen 1a, 1b und 1 c sind identisch ausgebildet und werden jeweils um einen Winkel von 40° Grad zueinander verdreht bezüglich der Längsachse X ineinander gesetzt, so dass die einzelnen Statorsegmente 2a, 2b und 2c abwechselnd in Umfangsrichtung des Stators nebeneinander liegend angeordnet werden. Der so aufgebaute Stator weist somit drei Statorsegmentgruppen mit jeweils drei Statorsegmenten mit Wicklungen 12 gleicher Phase auf.

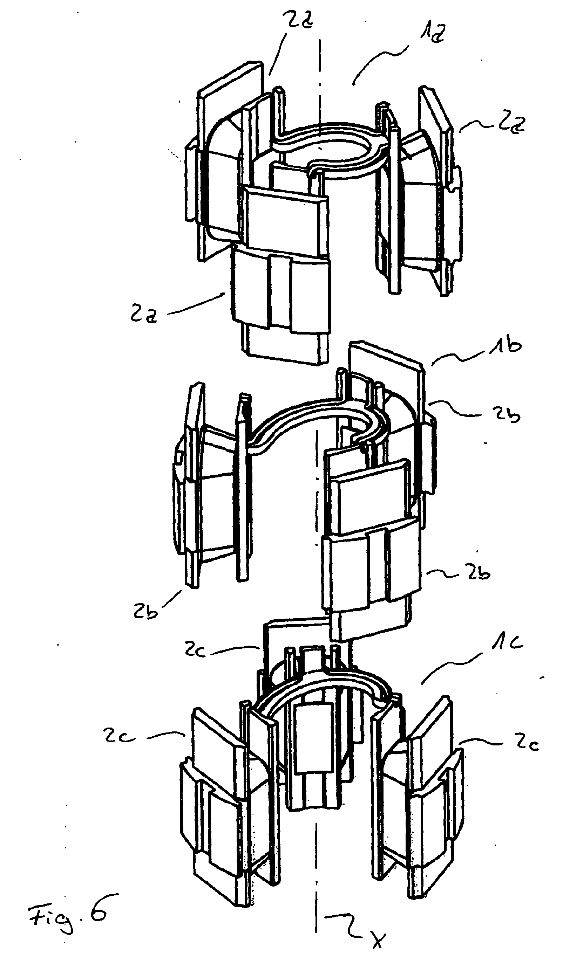

Fig. 7 zeigt den gemäß Fig. 6 zusammengesetzten Stator im montierten Zustand. Aufgrund ihres schrägen Verlaufes kommen dabei die Verbindungselemente 24a, 24b und 24c an einem axialen Ende des Stators übereinander zu liegen, so dass die drei identisch ausgebildeten Statorsegmentgruppen 1a, 1 b und 1c vollständig ineinander gesetzt werden können und ein ringförmiger Stator bestehend aus den abwechselnd angeordneten Statorsegmenten 2a, 2b und 2c gebildet wird.

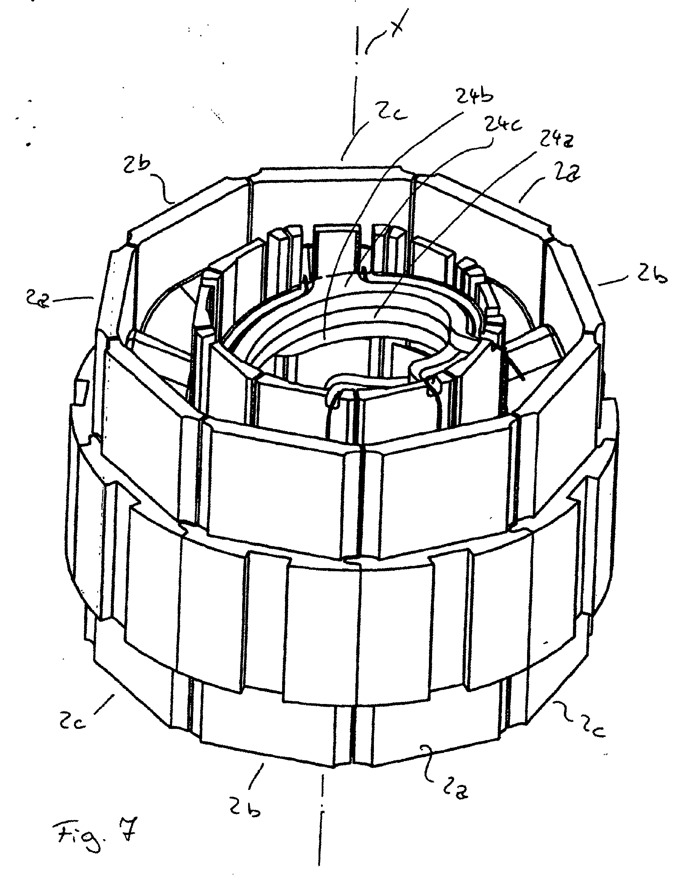

Fig. 8 zeigt in einer perspektivischen Ansicht eine weitere Ausführungsform der Erfindung, bei welcher zwei identische Statorsegmentgruppen 1 a und 1b mit jeweils zwei Statorsegmenten 2a und 2b vorgesehen sind. Der so gebildete Stator weist somit insgesamt vier Statorsegmente 2a, 2b mit insgesamt vier Spulen bzw. Wicklungen 12a und 12b auf. Auch gemäß dieser Ausführungsformen sind jeweils zwei Statorsegmente 2a mit Wicklungen 12a zu einer ersten Statorsegmentgruppe 2a und zwei Statorsegmente 2b mit Wicklungen 12b zu einer zweiten Statorsegmentgruppe 1 b verbunden. Der Aufbau der Statorsegmente 2a und 2b entspricht prinzipiell dem Aufbau der vorangehend beschriebenen Statorsegmente, nur dass die Länge des Kreisbogens, über den sich ein Statorsegment 2a, 2b erstreckt an die Anzahl der Statorsegmente angepasst ist, d.h. im vorliegenden Fall erstreckt sich jedes Statorsegment 2a, 2b über einen Viertelkreis des Stators. Auch gemäß der Ausführungsform in Fig. 8 weisen die Wicklungen 12a bzw. 12b jeder Statorsegmentgruppe 1 a, 1 b dieselbe Phase auf und sind elektrisch über einen Draht 20a bzw. 20b (nicht gezeigt) miteinander verbunden. Dies ermöglicht auch bei dieser Ausführungsform die Herstellung zweier Spu-len gleicher Phase mit einem durchgehenden Wicklungsdraht, wie vorangehend beschrieben. Die zwei Wicklungsträger 10a der Statorsegmentgruppe 1a sind über zwei Verbindungselemente 24a verbunden, welche sich an einem axialen Ende in den freien Umfangsbereichen zwischen den Statorsegmenten 2a erstrecken. Dabei sind die Verbindungselemente 24a so ausgebildet, dass sie gleichzeitig als Wicklungsschutzkappen für die Wicklungen 12b der zweiten Statorsegmentgruppe 1 b dienen können. D.h. die Verbindungselemente 24a sind kappenförmig ausgebildet, so dass sie das axiale Ende des Wicklungsträgers 10b übergreifen können. Die Statorsegmentgruppen 1a und 1b sind jeweils identisch ausgebildet und werden umgekehrt zusammengesetzt, so dass die Verbindungselemente 24a und 24b an axial entgegengesetzten Seiten des Stators angeordnet sind. Dabei übergreifen die als Wicklungsschutzkappen ausgebildeten Verbindungselemente 24a jeweils ein axiales Ende der Wicklungsträger 10b und die Verbindungselemente 24b jeweils ein axiales Ende der Wicklungsträger 10a.

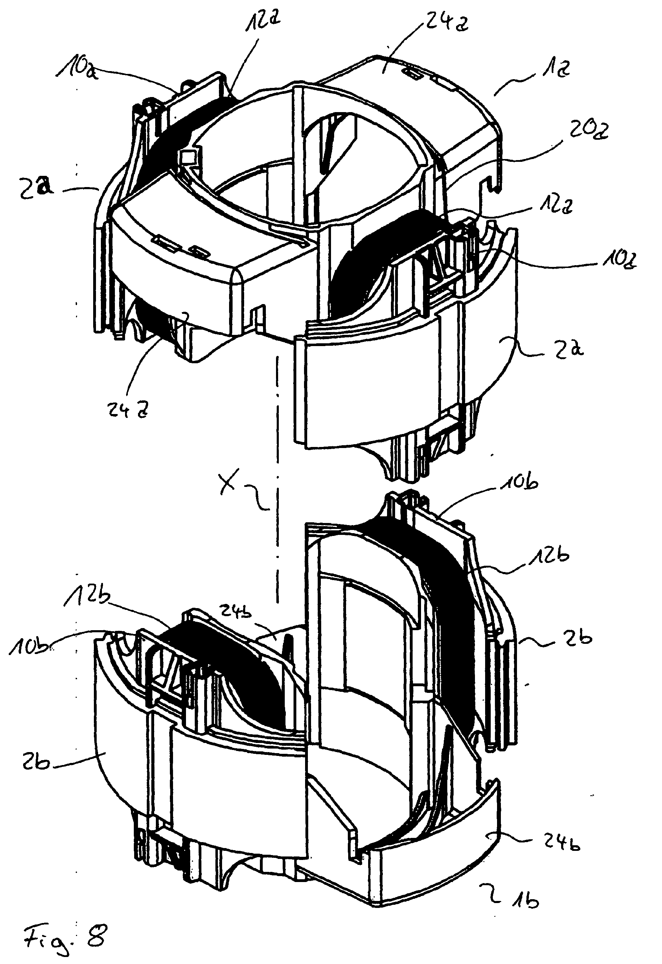

Der zusammengesetzte Zustand des Stators gemäß Fig. 8 ist in Fig. 9 gezeigt. Zusammengesetzt bilden die Statorsegmente 2a und 2b, welche immer abwechselnd angeordnet sind, einen geschlossenen Statorring, wobei die Jochsegmente, wie zuvor beschrieben, über Nut und Feder formschlüssig miteinander in Eingriff sind. Die Verbindungselemente 24a überdecken als Wicklungsschutzkappen das erste axiale Ende der Wicklungsträger 10b mit den darauf angeordneten Wicklungen 12b. Die entgegensetzten Enden der Wicklungsträger 10b sind noch offen und werden durch als separate Bauteile ausgebildete Wicklungsschutzkappen abgedeckt (hier nicht gezeigt). Entsprechend decken die Verbindungselemente 24b als Wicklungsschutzkappen jeweils ein axiales Ende der Wicklungsträger 10a ab. Die entgegengesetzten axialen Enden der Wicklungsträger 10a mit den darauf angeordneten Spulen 12a werden ebenfalls durch separate Wicklungsschutzkappen abgedeckt (nicht gezeigt). Diese zusätzlichen Wicklungsschutzkappen können ebenfalls alle identisch ausgebildet sein und mit den Wicklungsträgern 10a und 10b vorzugsweise über Rastverbindungen verbunden werden. Durch die umgekehrte Anordnung der Statorsegmentgruppen 1a und 1b, d.h. die von den Verbindungselementen 24a und 24b in axialer Richtung hervorstehenden Wicklungsträger 10a und 10b sind einander zugewandt, sind die Verbindungselemente 24a und 24b im zusammengesetzten Zustand des Stators an in Richtung der Längsachse X entgegensetzten Längsenden angeordnet.

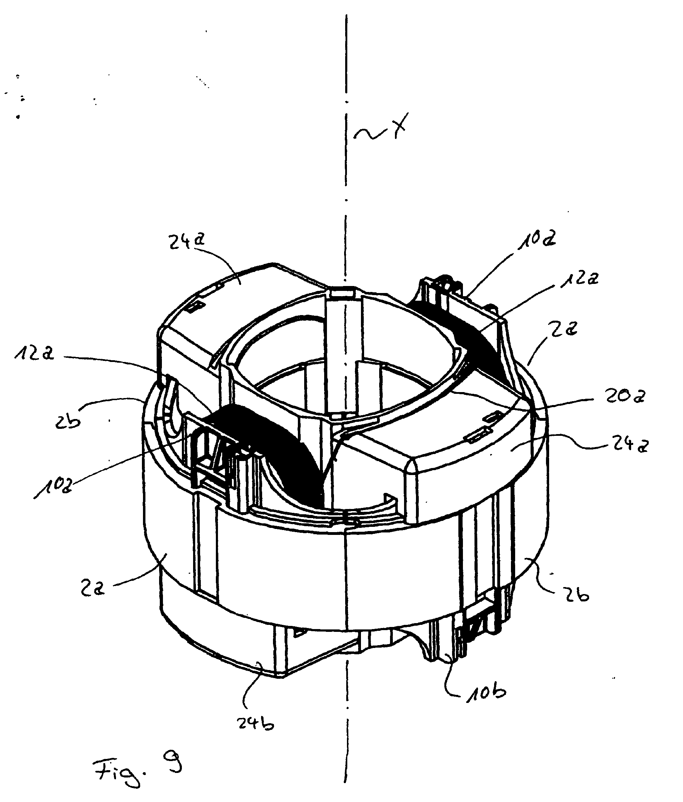

Fig. 10 zeigt in einer perspektivischen Ansicht eine weitere Ausführungsform der Erfindung. Auch bei dieser Ausführungsform sind vier Statorsegmente 2 vorgesehen, deren Aufbau jeweils den vorangehend beschriebenen Statorsegmenten und insbesondere den anhand von Fig. 8 und 9 beschriebenen Statorsegmenten entspricht. Die in Fig. 10 gezeigten Statorsegmente 2 weisen jedoch kein einstückig mit den Wicklungsträgern 10 ausgebildetes Verbindungselement auf. Vielmehr sind bei dieser Ausführungsform zwei als ringförmige Wicklungsschutzkappen 30 ausgebildete Verbindungselemente vorgesehen. Die Wicklungsschutzkappen 30 weisen Rastelemente 32 auf, über die die Wicklungsschutzkappen mit den Statorsegmenten 2 verbunden werden können, um einen Stator zu bilden. Auch diese Anordnung ermöglicht es, zunächst jeweils zwei der Statorsegmente mit jeweils einer der Wicklungsschutzkappen 30 zu einer Statorsegmentgruppe vorzumontieren und diese zwei Statorsegmentgruppen dann entsprechend der anhand von Fig. 8 beschriebenen Anordnung zusammenzusetzen. Vorteilhaft bei der Ausführungsform gemäß Fig. 10 ist, dass die Wicklungsschutzkappen 30 eine Doppelfunktion übemehmen, zum einen dienen Sie zum Schutz und zur Isolierung der axialen Enden der Wicklungen 12, zum anderen stellen sich gleichzeitig die mechanische Verbindung zwischen den einzelnen Statorsegmente 2 zur Bildung eines Stators her. Es kann somit auf zusätzliche Verbindungselemente verzichtet werden.

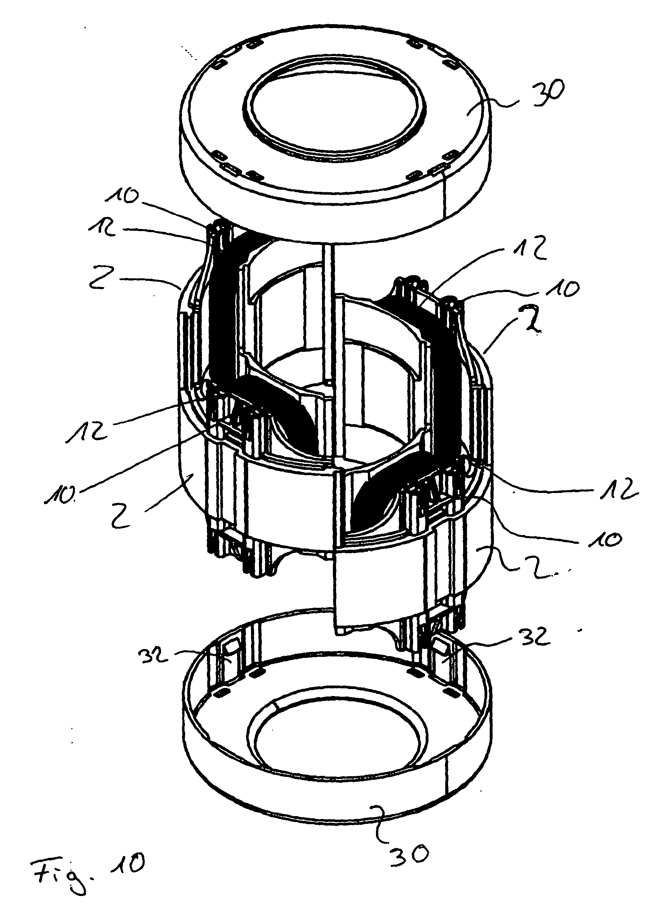

Fig. 11 zeigt den montierten Stator gemäß Fig. 10. Der so montierte Stator kann dann in ein Statorgehäuse eingesetzt werden, welches den Stator umfänglich umgibt oder den Motor anderweitig zusammenhält. Die elektrische Verbindung der Wicklungen 12 der Statorsegmente 2 wird vorteilhafterweise ebenfalls in den Wicklungsschutzkappen 30 in Form von Leiterbahnen oder Drähten geführt. Somit können die Statorsegmente 2 leicht elektrisch miteinander verschaltet werden. So ist es insbesondere möglich, Wicklungen 12 gleicher Phase vor dem Zusammensetzen des Stators als Statorsegmentgruppen elektrisch miteinander zu verbinden bzw. zu verschalten.

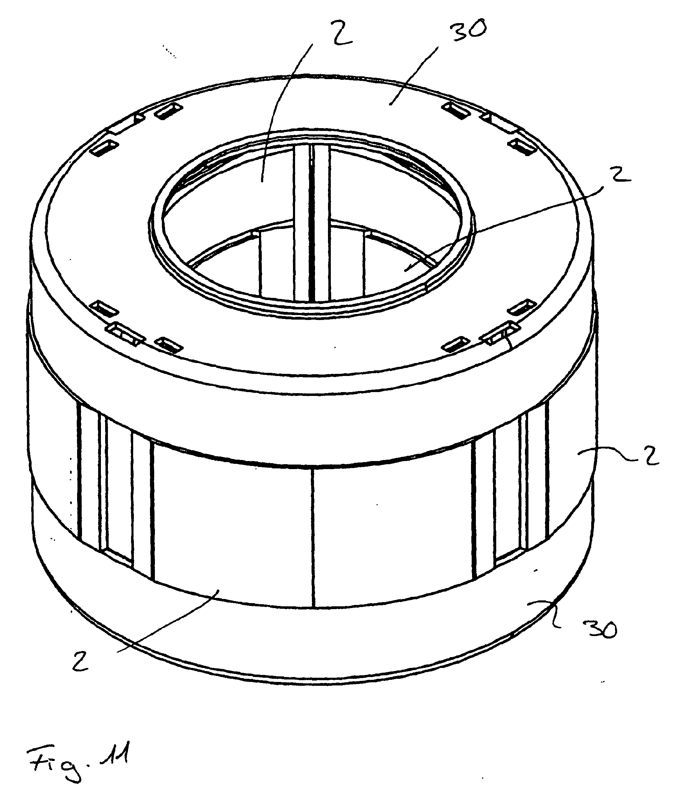

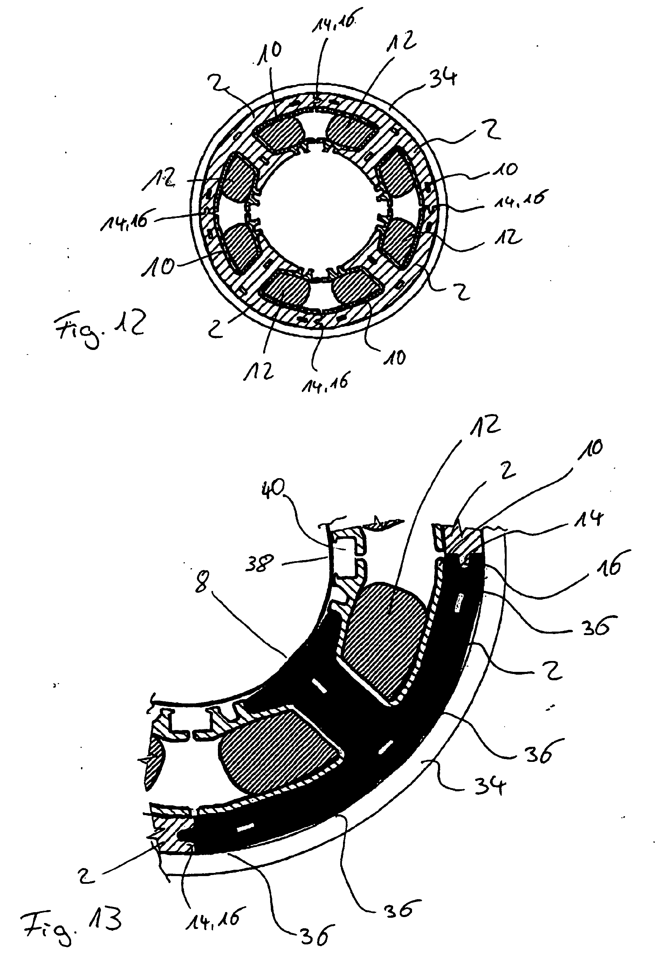

Anhand von Figuren 12 und 13 wird die Anordnung eines segmentierten Stators, beispielsweise gemäß einer der vorangehenden Ausgestaltungen, in einem Statorgehäuse 34 beschrieben. Fig. 12 zeigt die Schnittansicht eines Stators mit einem Statorgehäuse 34. Das Statorgehäuse 34 ist rohrförmig ausgebildet. Der gezeigte Stator besteht aus vier Statorsegmenten 2 mit einem Wicklungsträger 10 und einer darauf angeordneten Wicklung 12. Der Wicklungsträger 10 ist auf einem in bekannter Weise ausgebildeten Jochsegment, wie anhand von Fig. 1 beschrieben, angeordnet. Die einzelnen Statorsegmente 2 greifen, wie beschrieben über Nut 16 und Feder 14 formschlüssig ineinander ein. Der so gebildete Statorring bestehend aus vier Statorsegmenten 2 ist in das rohrförmige Statorgehäuse 34 eingepresst oder eingeschrumpft.

Fig. 13 zeigt eine Ausschnittsvergrößerung aus Fig. 12, welche im Wesentlichen ein Statorsegment 2, welches in dem Statorgehäuse 34 angeordnet ist, zeigt. Das Statorsegment 2 ist über die Feder 14 bzw. die Nut 16 an entgegensetzten umfänglichen Enden jeweils mit einem angrenzenden Statorsegment 2 formschlüssig im Eingriff. In Fig. 13 zu erkennen ist, dass das Statorsegment 2 nicht an seinem gesamten Außenumfang am Innenumfang des Statorgehäuses 34 anliegt. Das Statorsegment 2 liegt lediglich mit vier Anlagebereichen 36 am Innenumfang des Statorgehäuses 34 an. Zwischen den Anlagebereichen 36 ist das Statorsegment 2 an seinem Außenumfang im Querschnitt kreissehnenförmig abgeflacht ausgebildet, so dass es in diesen Bereichen zu dem Innenumfang des Statorgehäuses 34 beabstandet ist. Die Anlagebereiche 36 sind im Wesentlichen an den in Umfangsrichtung entgegengesetzten Enden sowie in Umfangsrichtung seitlich des Zahnes 8 am Außenumfang des Statorsegmentes 2 ausgebildet. Die Anlagebereiche 36 bewirken, dass, wenn der Stator in das Statorgehäuse 34 eingepresst wird, von dem Statorgehäuse 34 eine Druckkraft lediglich in den Analgebereichen 36 radial noch innen gerichtet auf das Statorsegment 2 aufgebracht wird. Dies bewirkt, dass die in Umfangsrichtung freien Enden des Statorsegmentes 2 im Wesentlichen um den Zahn 8 radial nach innen gebogen werden und somit im Bereich der Nut- und Federverbindung 14, 16 gegen das benachbarte Statorsegment 2 gedrückt werden. Auf diese Weise werden die einzelnen Statorsegmente 2 miteinander verspannt, so dass sie spielfrei aneinander anliegen und eine Geräuschentwicklung beim Betrieb des Motors vermieden wird.

Ferner ist in Fig. 13 am Innenumfang des Stators bzw. der Statorsegmente 2 ein Spaltrohr 38 gezeigt, wie es bei nasslaufenden Motoren, beispielsweise bei Pumpen zum Einsatz kommt. Die Statorsegmente 2 sind somit in dem ringförmigen Spalt zwischen Spaltrohr 38 und Statorgehäuse 34 angeordnet bzw. gehalten. Dabei sind die Statorsegmente 2 bevorzugt als Presspassung in den Freiraum zwischen Statorgehäuse 34 und Spaltrohr 38 eingesetzt, so dass alle Elemente spielfrei einander anliegen.

Am Innenumfang des Stators ist zwischen zwei einander angrenzenden Statorsegmenten 2 eine Nut 40 direkt am Außenumfang des Spaltrohres 38 ausgebildet. Diese Nut 40 kann zur Aufnahme eines Sensors dienen, wie er beispielsweise benötigt wird, um die Rotorposition zu bestimmen.

Anhand der vorangehenden Beispiele wurde der prinzipielle Aufbau des erfindungsgemäßen segmentierten Stators beispielhaft beschrieben. Es ist zu verstehen, dass sich einzelne Elemente der verschiedenen Ausführungsformen verschieden kombinieren lassen, d.h. insbesondere die beschriebenen Ausführungsformen auch mit anderen Anzahlen von Statorsegmenten oder Statorsegmentgruppen verwirklicht werden können und somit nicht auf die gezeigten Anzahlen beschränkt sind. Die Anzahl der erforderlichen Statorsegmentgruppen ergibt sich aus der Gesamtzahl der verwendeten Statorsegmente bzw. der darauf angeordneten Wicklungen sowie der Anzahl von Wicklungen gleicher Phase in dem jeweiligen Stator.

### Bezugszeichenliste

- 1, 1a, 1b, 1c -: Statorsegmentgruppe
- 2, 2a, 2b, 2c -: Statorsegmente
- 4 -: Inneres Jochsegment
- 6 -: Äußeres Jochsegment
- 8 -: Zahn
- 10, 10a, 10b, 10c -: Wicklungsträger
- 12, 12a, 12b, 12c -: Wicklung
- 14 -: Feder
- 16 -: Nut
- 18 -: Zahn
- 20 -: Draht
- 22 -: Elektrischer Anschlusspol
- 24, 24a, 24b, 24c -: Verbindungselement
- 26, 28 -: Enden des Verbindungselementes
- 30 -: Wicklungsschutzkappe
- 32 -: Rastelemente
- 34 -: Statorgehäuse
- 36 -: Anlagebereiche
- 38 -: Spaltrohr
- 40 -: Nut

- X -: Statorlängsochse

## Patentansprüche

1. Segmentierter Stator für einen Elektromotor, insbesondere für ein Pumpenaggregat, mit einem im Inneren des Stators angeordneten Spaltrohr und einer Vielzahl von Wicklungen, wobei jede Wicklung (12) in einem separaten Statorsegment (2) angeordnet ist, **dadurch gekennzeichnet, dass** der Stator zumin dest ein Verbindungselement (24) aufweist,
vor der abschließenden Montage des Stators zumindest zwei Statorsegmente (2) mit zugehörigen Wicklungen (12) gleicher Phase durch das Verbindungselement (24) mechanisch zu einer vormontierten Statorsegmentgruppe (1) verbunden sind, das Verbindungselement (24) axialseitig an dem Stator angeordnet ist und die Wicklungen (12) der Statorsegmente (2) einer Statorsegmentgruppe (1) entlang dem Verbindungselement (24) elektrisch miteinander verbunden sind.

2. Stator nach Anspruch 1, **dadurch gekennzeichnet, dass** vor der Montage des Stators jeweils zumindest zwei nicht benachbarte Statorsegmente (2) mechanisch zu einer vormontierten Statorsegmentgruppe (1) verbunden sind und zumindest zwei Statorsegmentgruppen (1) zu einem Stator zusammensetzbar sind.

3. Stator nach Anspruch 1 oder 2, **dadurch gekennzeichnet, dass** jedes Statorsegment (2) zumindest einen Wicklungsträger (10), auf welchem die Wicklung (12) angeordnet ist, sowie vorzugsweise ein inneres (4) und/oder ein äußeres (6) Jochsegment aufweist.

4. Stator nach einem der vorangehenden Ansprüche, **dadurch gekennzeichnet, dass** zumindest jeweils ein Abschnitt der Wicklungsträger (10) der zumindest zwei Statorsegmente (2) einer Statorsegmentgruppe (1) mit zumindest einem die Statorsegmente mechanisch verbindenden Verbindungselement (24) einstückig, vorzugsweise aus Kunststoff ausgebildet sind.

5. Stator nach Anspruch einem der vorangehenden Ansprüche, **dadurch gekennzeichnet, dass** die Wicklungen (12) der Statorsegmente (2) einer Statorsegmentgruppe (1) durch einen ununterbrochenen Wicklungsdraht (20) gebildet sind.

6. Stator nach einem der vorangehenden Ansprüche **dadurch gekennzeichnet, dass** die zumindest zwei Statorsegmentgruppen (12, 16) derart zu einem Stator zusammensetzbar sind, dass die mechanische Verbindung (24a) der Statorsegmente (2a) der ersten Statorsegmentgruppe (12) an einer ersten Axialseite des Stators und die mechanische Verbindung (24b) der Statorsegmente (2b) der zweiten Statorsegmentgruppe (1b) an einer zweiten entgegengesetzten Axialseite des Stators angeordnet sind.

7. Stator nach einem der Ansprüche 1 bis 5, **dadurch gekennzeichnet, dass** die zumindest zwei Statorsegmentgruppen derart zu einem Stator zusammensetzbar sind, dass die mechanischen Verbindungen zwischen den einzelnen Statorsegmenten (2) der Statorsegmentgruppen (1) alle an derselben Axialseite des Stators angeordnet sind.

8. Stator nach Anspruch 7, **dadurch gekennzeichnet, dass** die mechanischen Verbindungen (24) zwischen den Statorsegmenten (2) so ausgebildet sind, dass die einzelnen Verbindungen (24) der mehreren Statorsegmentgruppen (1) im zusammengesetzten Zustand des Stators zumindest in Teilbereichen übereinanderliegen.

9. Stator nach einem der vorangehenden Ansprüche, **dadurch gekennzeichnet, dass** die mechanischen Verbindungen (24) zwischen den einzelnen Statorsegmenten (2) in Form zumindest eines ringförmigen Verbindungselementes (30), vorzugsweise in Form einer Wicklungsschutzkappe ausgebildet sind, welches mit zumindest einer Axialseite der Statorsegmente (2) verbunden ist.

10. Stator nach Anspruch 9, **dadurch gekennzeichnet, dass** zwei ringförmige Verbindungselemente (30) an zwei einander entgegengesetzten Axialseiten des Stators vorgesehen sind.

11. Stator nach einem der vorangehenden Ansprüche, **dadurch gekennzeichnet, dass** zwei oder drei Statorsegmentgruppen (1) vorgesehen sind.

12. Stator nach einem der vorangehenden Ansprüche, **dadurch gekennzeichnet, dass** jede Statorsegmentgruppe (1) zwei Statorsegmente aufweist oder jede Statorsegmentgruppe (1) drei Statorsegmente (2) aufweist.

13. Stator nach einem der vorangehenden Ansprüche, **dadurch gekennzeichnet, dass** mehrere oder alle Statorsegmentgruppen (1) des Stators identisch ausgebildet sind.

14. Stator nach einem der vorangehenden Ansprüche, **dadurch gekennzeichnet, dass** die Statorsegmente (2) an ihrem Außenumfang lediglich mit ihren den angrenzenden Statorsegmenfen (2) zugewandten Endbereichen (36) am Innenumfang eines Statorgehäuses (34) anliegen.

15. Stator nach Anspruch 14, **dadurch gekennzeichnet, dass** die Statorsegmenten (2) an ihrem Außenumfang zusätzlich mit Abschnitten (36) im Bereich oder seitlich eines Zahnes (8), auf dem der Wicklungsträger (10) mit der Wicklung (12) angeordnet ist, am Innenumfang des Statorgehäuses (34) anliegen.

16. Stator nach Anspruch 14 oder 15, **dadurch gekennzeichnet, dass** das Statorgehäuse (34) einen kreisförmigen Innenquerschnitt aufweist und die Statorsegmente (2) einen korrespondierenden kreisbogenförmigen Außenumfang aufweisen, wobei die Bereiche zwischen den am Innenumfang des Statorgehäuses (34) anliegenden Abschnitten (36) des Außenumfanges der Statorsegmente (2) abgeflacht ausgebildet sind.

## Claims

1. A segmented stator for an electric motor, in particular for a pump assembly, with a can arranged in the inside of the stator, and with a plurality of windings, wherein each winding (12) is arranged in a separate stator segment (2), **characterised in that** the stator comprises at least one connection element (24), and that before the final assembly of the stator, at least two stator segments (2) with associated windings (12) of the same phase are mechanically connected into a preassembled stator segment group (1) by way of the connection element, the connection element (24) is arranged on the stator on the axial side, and the windings (12) of the stator segments (2) of a stator segment group (1) ore electrically connected to one another along the connection element (24).

2. A stator according to claim 1, **characterised in that** before the assembly of the stator, in each case at least two stator segments (2) which are not adjacent to one another are mechanically connected into a preassembled stator segment group (1), and at least two stator segment groups (1) may be, assembled into a stator.

3. A stator according to claim 1 or 2, **characterised in that** each stator segment (2) comprises at least one winding carrier (10), on which the winding (12) is arranged, as well as preferably an inner (4) and/or an outer (6) yoke segment.

4. A stator according to one of the preceding claims, **characterised in that** at least in each case one section of the winding carrier (10) of the at least two stator segments (2) of a stator segment group (1) is formed as one piece with at least one connection element (24) mechanically connecting the stator segments, preferably of plastic

5. A stator according to one of the preceding claims, **characterised in that** the windings (12) of the stator segments (2) of a stator segment group (1) are formed by way of an uninterrupted winding wire (20).

6. A stator according to one of the preceding claims, **characterised in that** the at least two stator segment groups (12, 16) may be assembled into a stator, in a manner such that the mechanical connection (24a) of the stator segments (2a) of the first stator segment group (12) is arranged on a first axial side of the stator, and the mechanical connection (24b) of the stator segments (2b) of the second stator segment group (1b) is arranged on a second opposed axial side of the stator.

7. A stator according to one of the claims 1 to 5, **characterised in that** the at least two stator segment groups may be assembled into a stator, in a manner such that the mechanical connections between the individual stator segments (2) of the stator segment groups (1) are all arranged on the same axial side of the stator.

8. A stator according to claim 7, **characterised in that** the mechanical connections (24) between the stator segments (2) are designed such that the individual connections (24) of the several stator segment groups (1) lie above one another at least in part regions, in the assembled condition of the stator.

9. A stator according to one of the preceding claims, **characterised in that** the mechanical connections (24) between the individual stator segments (2) are designed in the form of at least one annular connection element (30), preferably in the form of a winding protective cap, which is connected to at least one axial side of the stator segments (2).

10. A stator according to claim 9, **characterised in that** two annular connection elements (30) are provided on axial sides of the stator which are opposed to one another.

11. A stator according to one of the preceding claims, **characterised in that** two or three stator segment groups (1) are provided.

12. A stator according to one of the preceding claims, **characterised in that** each stator segment group (1) comprises two stator segments, or each stator segment groups (1) comprises three stator segments (2).

13. A stator according to one of the preceding claims, **characterised in that** several or all stator segment groups (1) of the stator are designed in an identical manner.

14. A stator according to one of the preceding claims, **characterised in that** the stator segments (2) on their outer periphery bear on the inner periphery of a stator housing (34) only with their end regions (36) facing the bordering stator segments (2).

15. A stator according to claim 14, **characterised in that** the stator segments (2) on their outer periphery additionally bear on the inner periphery of the stator housing (34) with sections (36) in the region or laterally of a tooth (8) on which the winding carrier (10) with the winding (12) is arranged.

16. A stator according to claim 14 or 15, **characterised in that** the stator housing (34) comprises a circular inner cross section, and the stator segments (2) comprise a corresponding circular-arc-shaped outer periphery, wherein the regions between the sections of the outer periphery of the stator segments (2), which bear on the inner periphery of the stator housing (34), are formed flattened.

## Revendications

1. Stator segmenté pour moteur électrique, en particulier pour groupe motopompe, avec une gaine disposée à l'intérieur du stator et une pluralité d'enroulements, chaque enroulement (12) étant disposé dans un segment de stator (2) séparé, **caractérisé en ce que** le stator présente au moins un élément de liaison (24), **en ce qu'**au moins deux segments de stator (2) sont, avant le montage final du stator, reliés mécaniquement à des enroulements (12) correspondants de même phase par l'élément de liaison (24) pour former un groupe (1) de segments de stator prémonté, **en ce que** l'élément de liaison (24) est disposé côté axial sur le stator et les enroulements (12) des segments de stator (2) d'un groupe (1) de segments de stator sont reliés électriquement entre eux le long de l'élément de liaison (24).

2. Stator selon la revendication 1, **caractérisé en ce que**, avant le montage du stator, respectivement au moins deux segments de stator (2) non voisins sont reliés mécaniquement pour former un groupe (1) de segments de stator prémonté et **en ce qu'**au moins deux groupes (1) de segments de stator peuvent être assemblés pour former un stator.

3. Stator selon la revendication 1 ou 2, **caractérisé en ce que** chaque segment de stator (2) présente ou moins un support d'enroulement (10), sur lequel l'enroulement (12) est disposé, ainsi que de préférence un segment de culasse intérieur (4) et/ou un segment de culasse extérieur (6).

4. Stator selon l'une des revendications précédentes, **caractérisé en ce qu'**au moins respectivement une partie des supports d'enroulement (10) des au moins deux segments de stator (2) d'un groupe (1) de segments de stator sont réalisés d'une seule pièce, de préférence en matière plastique, avec au moins un élément de liaison (24) reliant mécaniquement les segments de stator.

5. Stator selon l'une des revendications précédentes, **caractérisé en ce que** les enroulements (12) des segments de stator (2) d'un groupe (1) de segments de stator sont formés par un fil d'enroulement (20) ininterrompu.

6. Stator selon l'une des revendications précédentes, **caractérisé en ce que** les au moins deux groupes (12, 16) de segments de stator peuvent être assemblés pour former un stator de telle sorte que la liaison mécanique (24a) des segments de stator (2a) du premier groupe (12) de segments de stator est disposée sur un premier côté axial du stator et la liaison mécanique (24b) des segments de stator (2b) du second groupe (1b) de segments de stator est disposée sur un second côté axial opposé du stator.

7. Stator selon l'une des revendications 1 à 5, **caractérisé en ce que** les au moins deux groupes de segments de stator peuvent être assemblés pour former un stator de telle sorte que les liaisons mécaniques entre les segments de stator (2) individuels des groupes (1) de segments de stator sont toutes disposées du même côté axial du stator.

8. Stator selon la revendication 7, **caractérisé en ce que** les liaisons mécaniques (24) entre les segments de stator (2) sont réalisées de telle sorte que les liaisons individuelles (24) des plusieurs groupes (1) de segments de stator sont superposées au moins dans des zones partielles lorsque le stator est assemblé.

9. Stator selon l'une des revendications précédentes, **caractérisé en ce que** les liaisons (24) mécaniques entre les segments de stator (2) individuels sont réalisées sous la forme d'au moins un élément de liaison (30) de forme annulaire, de préférence sous la forme d'un capot de protection d'enroulement, qui est relié à au moins un côté axial des segments de stator (2).

10. Stator selon la revendication 9, **caractérisé en ce que** deux éléments de liaison (30) de forme annulaire sont prévus sur deux côtés axiaux du stator opposés l'un à l'autre.

11. Stator selon l'une des revendications précédentes, **caractérisé en ce que** deux ou trois groupes (1) de segments de stator sont prévus.

12. Stator selon l'une des revendications précédentes, **caractérisé en ce que** chaque groupe (1) de segments de stator présente deux segments de stator ou chaque groupe (1) de segments de stator présente trois segments de stator (2).

13. Stator selon l'une des revendications précédentes, **caractérisé en ce que** plusieurs ou tous les groupes (1) de segments de stator du stator sont réalisés de façon identique.

14. Stator selon l'une des revendications précédentes, **caractérisé en ce que** les segments de stator (2) s'appliquent par leur pourtour extérieur sur le pourtour intérieur d'un carter de stator (34) uniquement par leurs zones d'extrémité (36) tournées vers les segments de stator (2).

15. Stator selon la revendication 14, **caractérisé en ce que** les segments de stator (2) s'appliquent par leur pourtour extérieur sur le pourtour intérieur du boîtier de stator (34) en plus par des parties (36) dans la zone ou sur le côté d'une dent (8), sur laquelle le support d'enroulement (10) est disposé avec l'enroulement (12).

16. Stator selon la revendication 14 ou 15, **caractérisé en ce que** le carter de stator (34) présente une section intérieure circulaire et les segments de stator (2) présentent un pourtour extérieur en forme d'arc de cercle correspondant, les zones, situées entre les parties (36) du pourtour extérieur des segments de stator (2) qui s'appliquent sur le pourtour intérieur du carter de stator (34), étant aplaties.
